# EUROPÄISCHE PATENTANMELDUNG

(11) **EP 0 524 332 A1**
(43) Veröffentlichungstag der Anmeldung: **27.01.1993**
(21) Anmeldenummer: 91112354.5
(22) Anmeldetag: 23.07.1991
(51) Int. Cl.: G21C 3/10, C21D 9/50, C22F 1/18

(54) **Brennstab für einen Kernreaktor und Verfahren zum Herstellen eines Schweissbereichs**

(71) Anmelder: SIEMENS AKTIENGESELLSCHAFT, D-80333 München (DE)
(72) Erfinder: Krellmann, Jürgen, Dipl.-Ing., W-8760 Miltenberg (DE)

(57) **Zusammenfassung**

Ein Brennstab für einen Kernreaktor mit einem Hüllrohr (2) aus einem der Werkstoffe Zirkoniumlegierung und Stahl ist mit Kernbrennstoff gefüllt und weist einen an einem Rohrende angeschweißten Verschlußstopfen (3) aus dem gleichen Werkstoff wie das Hüllrohr (2) auf. Dieser Verschlußstopfen (3) geht in die Wand des Hüllrohres (2) über. Sein Boden innerhalb des Hüllrohres (2) stößt innerhalb des Hüllrohres (2) auf die Innenseite des Hüllrohres (2) unter einem Winkel von mindestens 10°. Die Gefügestruktur des Werkstoffs des besonders gasdichten Schweißbereichs (9) beiderseits des Querschnitts (12) des Hüllrohres (2) am Rohrende ist grobkörniger als im Werkstoff des Hüllrohres (2) außerhalb des Schweißbereichs (9).

## Beschreibung

Die Erfindung betrifft einen Brennstab für einen Kernreaktor entsprechend dem Oberbegriff des Patentanspruchs 1 und ein verfahren zum Herstellen eines Schweißbereiches entsprechend dem Oberbegriff des Patentanspruchs 5.

Ein Brennstab entsprechend dem Oberbegriff des Patentanspruchs 1 ist bereits im Handel. Der Schweißbereich zwischen dem Rohrende und dem innerhalb des Hüllrohres angeordneten Verschlußstopfens wurde entsprechend dem Oberbegriff des Patentanspruchs 5, also durch das bekannte Widerstandspreßschweißen hergestellt. Die Gefügestruktur des Werkstoffes beiderseits des Querschnitts des Hüllrohres am Rohrende ist genauso feinkörnig wie in Teilen des Hüllrohres, die durch keinerlei Schweißvorgänge beeinflußt wurden.

Der Erfindung liegt die Aufgabe zugrunde, die Verbindung zwischen dem Hüllrohr und dem verschlußstopfen besonders gasdicht zu gestalten.

Zur Lösung dieser Aufgabe hat ein Brennstab der eingangs erwähnten Art erfindungsgemäß die Merkmale des kennzeichnenden Teils des Patentanspruchs 1.

Diese Merkmale werden durch die Verfahrensschritte entsprechend dem kennzeichnenden Teil des Patentanspruchs 5 erzielt.

Durch das Inertgas-Schmelzschweißen entsprechend dem kennzeichnenden Teil des Patentanspruchs 5 werden Bindefehler und Einschlüsse von Oxiden, die das Rückhaltevermögen des Werkstoffs für Gas beeinflussen könnten, sicher beseitigt.

Die Patentansprüche 2 bis 4 sind auf vorteilhafte Weiterbildungen gerichtet.

Es ist zwar bereits üblich, zum Beispiel ein Hüllrohr aus einer Zirkoniumlegierung mit einem im Rohrende des Hüllrohres im Paßsitz befindlichen Verschlußstopfen aus einer Zirkoniumlegierung ausschließlich durch Inertgas-Schmelzschweißen zu verbinden, jedoch kann es hierbei durch Poren zu Schweißfehlern kommen, die durch die Erfindung vermieden werden.

Die Erfindung und ihre Vorteile sind anhand der Zeichnung an einem Ausführungsbeispiel näher erläutert:
- FIG 1: zeigt im Längsschnitt das Widerstandspreßschweißen eines Verschlußstopfens an einem Hüllrohr,
- FIG 2: zeigt in einem Längsschnitt das Überschweißen der nach dem Verfahren entsprechend Figur 1 gewonnenen Schweißstelle durch Inertgas-Schmelzschweißen,
- FIG 3: zeigt ein Schliffbild im Längsschnitt durch ein entsprechend den Verfahren nach Figur 1 und 2 mit einem Verschlußstopfen verschlossenes Hüllrohr,
- FIG 4: zeigt das Schliffbild im Längsschnitt durch Hüllrohr und Verschlußstopfen nach einem Festigkeitstest.

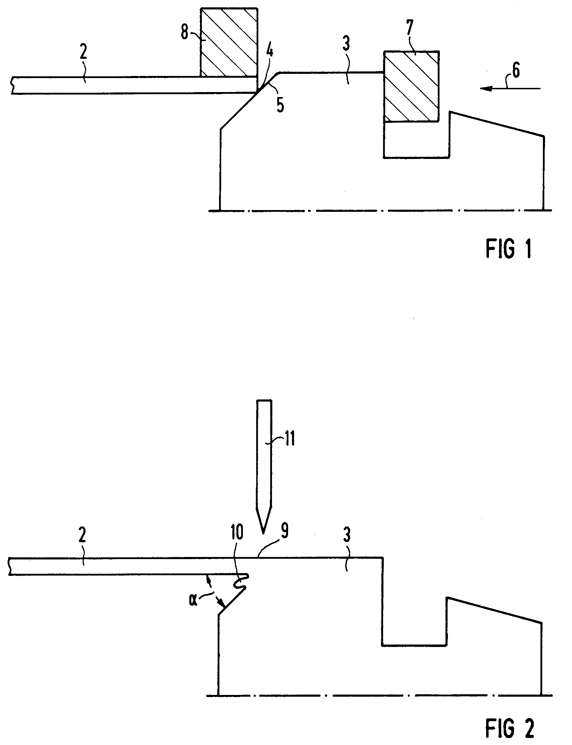

Nach Figur 1 sind ein ortsfest gehaltenes Hüllrohr 2 aus Zircaloy 4 (1.2 bis 1.7 Gew.-% Sn, 0.18 bis 0.24 Gew.-% Fe, 0.07 bis 0.13 Gew.-% Cr, 0.10 bis 0.16 Gew.-% Sauerstoff, bis zu 120 ppm Si, Rest Zirkonium und unvermeidliche Verunreinigungen; Gew.-%-Summe von Fe und Cr: 0.28 bis 0.37 Gew.-%) und ein Verschlußstopfen 3 ebenfalls aus Zirkaloy 4 (beide im Ausgangszustand) koaxial zueinander angeordnet. Das Hüllrohr 2 liegt an einem Ende mit dem Innenrand seiner Stirnfläche an einem konusförmigen Teil 5 (45°-Konus) des Bodens des Verschlußstopfens 3 an. Dieser Verschlußstopfen 3 wird durch eine Preßkraft entsprechend dem Pfeil 6 in Axialrichtung gegen die Innenkante 4 gepreßt.

Am Verschlußstopfen 3 sitzt eine erste ringförmige Elektrode 7 und am Hüllrohr 2 eine zweite ringförmige Elektrode 8. Der zwischen den beiden Elektroden 7 und 8 fließende elektrische Strom ist nur so stark, daß sich der Überstand des Werkstoffs des Hüllrohrs 2 an der Innenkante 4 unter beständig einwirkender Preßkraft entsprechend Pfeil 6 plastisch verformt, aber nicht verflüssigt.

Schließlich bildet sich zwischen dem Verschlußstopfen 3 und dem Hüllrohr 2 ein Schweißbereich 9 aus mit je einer wulstartigen Werkstoffauspressung auf der Innenseite und auf der Außenseite des Hüllrohres 2. In Figur 2 ist dieser erkaltete Schweißbereich 9 mit der wulstartigen Werkstoffauspressung 10 auf der Innenseite des Hüllrohrs 2 erkennbar. Die wulstartige Werkstoffauspressung auf der Außenseite des Hüllrohrs 2 wurde vorher abgedreht.

Das Hüllrohr 2 mit dem angeschweißten Verschlußstopfen 3 nach Figur 2 befindet sich z.B. in einer inerten Helium- oder Argonatmosphäre. Der Druck dieser Helium-oder Argonatmosphäre ist günstigerweise möglichst hoch, so daß er den Druck eines im Hüllrohr 2 außer dem Kernbrenntoff zusätzlich befindlichen inerten Gases wenigstens zum Teil kompensiert. Radial neben der Schweißstelle 9 befindet sich mit Abstand eine Wolframelektrode 11, die spitz auf das Hüllrohr 2 zu verläuft. An dem Verschlußstopfen 3 und an der Wolframelektrode 11 liegt eine elektrische Hochspannung an, so daß sich zwischen der Schweißstelle 9 und der Spitze der Wolframelektrode 11 ein Lichtbogen ausbildet. Hüllrohr 2 und Verschlußstopfen 3 werden um ihre Längsachse gedreht, und der Lichtbogen zwischen der Schweißstelle 9 und der Spitze der Wolframelektrode 11 überschweißt die Verschweißstelle 9 unter Aufschmelzen dieser Schweißstelle 9. Anstelle der Wolframelektrode 11 kann auch ein Laser verwendet werden.

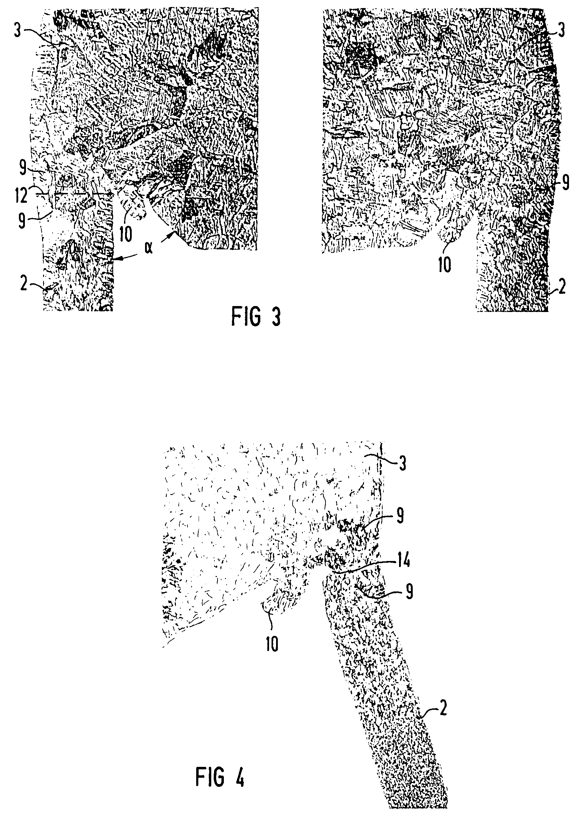

Wie das Schliffbild im Längsschnitt nach Figur 3 zeigt, hat der Werkstoff an der nach dem Überschweißen wieder erkalteten Schweißstelle 9 beiderseits des Querschnitts 12 am Rohrende des Hüllrohrs 2 die gleiche grobkörnige Gefügestruktur. Diese Gefügestruktur ist auch grobkörniger als die in Figur 4 erkennbare feinkörnige Gefügestruktur des Werkstoffs des Hüllrohres 2 außerhalb des Schweißbereichs 9, die durch keinerlei Schweißvorgänge beeinflußt, also insbesondere nicht lokal aufgeschmolzen wurde. Ferner stößt der Boden des Verschlußstopfens 3 unter einem Winkel α von 45° auf die Innenseite des Hüllrohres 2. Im Winkelraum zwischen der Innenseite des Hüllrohrs 2 und dem Boden des Verschlußstopfens 3 eine wulstartige Werkstoffauspressung 13 zu erkennen, die sowohl Abstand vom Boden des Verschlußstopfens 3 als auch von der Innenseite des Hüllrohres 2 hat und die gleiche grobkörnige Gefügestruktur aufweist wie der Werkstoff im Schweißbereich 9 beiderseits des Querschnitts 12 des Hüllrohres 2 am Rohrende dieses Hüllrohres 2.

Figur 4, in der gleiche Teile gleiche Bezugszeichen wie in Figur 3 haben, zeigt einen Bruch 14, der genau an der Sollstelle im Hüllrohr 2 an dessen Rohrende entstanden ist, nachdem bei einem Festigkeitstest der Innendruck in dem mit dem Verschlußstopfen 3 verschlossenen Hüllrohr 2 genügend hoch gefahren wurde. Dies deutet darauf hin, daß sich im Schweißbereich 9 nach Figur 3 keine Schweißfehler befinden.

## Patentansprüche

1. Brennstab für einen Kernreaktor mit einem Hüllrohr aus einem der Werkstoffe Zirkoniumlegierung und Stahl, das mit Kernbrennstoff gefüllt ist und einen an einem Rohrende angeschweißten Verschlußstopfen aus dem gleichen Werkstoff wie das Hüllrohr aufweist, der in die Wand des Hüllrohres übergeht und dessen Boden innerhalb des Hüllrohres auf die Innenseite des Hüllrohres unter einem Winkel α von mindestens 10°, insbesondere von mindestens 20°, stößt.
**dadurch gekennzeichnet,**
daß die Gefügestruktur des Werkstoffs in einem Schweißbereich (9) beiderseits des Querschnitts (12) des Hüllrohres (2) am Rohrende grobkörniger ist als im Werkstoff des Hüllrohrs (2) außerhalb des Schweißbereichs (9).

2. Brennstab nach Anspruch 1, **dadurch gekennzeichnet,** daß sich im Winkelraum zwischen der Innenseite des Hüllrohrs (2) und dem Boden des Verschlußstopfens (3) eine wulstartige Werkstoffauspressung (10) befindet.

3. Brennstab nach Anspruch 2, **dadurch gekennzeichnet,** daß die Werkstoffauspressung (10) die gleiche grobkörnige Gefügestruktur wie der Werkstoff im Schweißbereich (9) beiderseits des Querschnitts (12) des Hüllrohres (2) am Rohrende hat.

4. Brennstab nach Anspruch 1, **dadurch gekennzeichnet,** daß der Boden des Verschlußstopfens (3) auf die Innenseite des Hüllrohres (2) unter einem Winkel α im Bereich von 25° bis 50°, vorzugsweise von 30° bis 45°, stößt.

5. Verfahren zum Herstellen eines Schweißbereichs zwischen einem Rohrende eines Rohres aus einem der Werkstoffe Zirkoniumlegierung und Stahl als einem ersten Schweißteil und einem Rohrende eines anderen Rohres oder einem Verschlußstopfen aus dem gleichen Werkstoff als einem zweiten Schweißteil, bei dem der Werkstoff an einer gemeinsamen Schweißstelle der beiden Schweißteile durch einen diesen Werkstoff durchfließenden elektrischen Strom plastisch verformbar gemacht wird und zugleich die beiden Schweißteile an der Schweißstelle gegeneinandergepreßt werden (Widerstandspreßschweißen),
**dadurch gekennzeichnet,** daß der Werkstoff an der Schweißstelle (9) anschließend in einer Inertgasatmosphäre unter Aufschmelzen überschweißt wird (Intertgas-Schmelzschweißen).
